# EUROPÄISCHE PATENTANMELDUNG

(11) **EP 4 002 626 A1**
(43) Veröffentlichungstag der Anmeldung: **25.05.2022**
(21) Anmeldenummer: 20208744.1
(22) Anmeldetag: 19.11.2020
(51) Int. Cl.: H02J 3/00, H02J 3/38, F03D 7/02, F03D 7/04

(54) **DEFINIERTE SCHALTERSTELLUNG BEI EINEM WINDPARK VOR AUSFALL DER DC-VERSORGUNG**

(71) Anmelder: Wobben Properties GmbH, 26607 Aurich (DE)
(72) Erfinder: Brombach, Johannes, 13437 Berlin (DE); Fleßner, Tammo, 26802 Moormerland (DE)
(74) Vertreter: Eisenführ Speiser

(57) **Zusammenfassung**

Die vorliegende Erfindung betrifft ein Verfahren zum Steuern einer Windenergieanlage oder eines Windparks, umfassend die Schritte: Feststellen eines Netzfehlers innerhalb eines, von einem Netzbetreiber betriebenen elektrischen Versorgungsnetzes mit dem die Windenergieanlage oder der Windpark über einen Netzanschlusspunkt elektrisch verbunden ist; Schalten von elektrischen Schaltern der Windenergieanlage oder des Windparks durch eine Steuereinheit der Windenergieanlage oder des Windparks, die durch eine Niederspannungsversorgung betrieben wird, so dass die Windenergieanlage oder der Windpark spannungsfrei ist; Prüfen eines elektrischen Speichers zur Sicherstellung der Niederspannungsversorgung, nachdem der Netzfehler innerhalb des elektrischen Versorgungsnetzes festgestellt worden ist; Schalten von weiteren elektrischen Schaltern der Windenergieanlage oder des Windparks in einen vordefinierten Schaltzustand, in dem ein Anfahren der Windenergieanlage oder des Windparks möglich ist.

## Beschreibung

Die vorliegende Erfindung betrifft ein Verfahren zum Steuern einer Windenergieanlage und/oder eines Windparks sowie eine solche Windenergieanlage und einen solchen Windpark.

Ein Windpark ist üblicherweise über einen Netzanschlusspunkt mit einem elektrischen Versorgungsnetz verbunden und weist eine Vielzahl von Windenergieanlagen auf, die über ein gemeinsames elektrisches Windparknetz miteinander verbunden sind.

Im Falle von Netzfehlern innerhalb des elektrischen Versorgungsnetzes kann es dazu kommen, dass sich der Windpark von dem elektrischen Versorgungsnetz trennt oder trennen muss.

Hierdurch kann es ferner dazu kommen, dass der Windpark keine oder nicht ausreichende Energie hat, um (wieder), insbesondere von selbst, anzufahren.

Ein solcher Windpark kann somit auch nicht an einem Netzwiederaufbau des elektrischen Versorgungsnetzes teilnehmen.

Aufgabe der vorliegenden Erfindung ist es daher, eines der oben genannten Probleme zu adressieren. Insbesondere soll eine Möglichkeit geschaffen werden, ein Verfahren für eine Windenergieanlage oder einen Windpark bereitzustellen, mit dem es möglich ist, an einem Netzwiederaufbau eines elektrischen Versorgungsnetzes teilzunehmen, insbesondere, wenn zuvor ein andauernder Netzausfall anstand. Zumindest soll aber eine Alternative zu bisher Bekanntem bereitgestellt werden.

Erfindungsgemäß wird somit ein Verfahren zum Steuern einer Windenergieanlage oder eines Windparks vorgeschlagen, umfassend die Schritte: Feststellen eines Netzfehlers innerhalb eines, von einem Netzbetreiber betriebenen elektrischen Versorgungsnetzes mit dem die Windenergieanlage oder der Windpark über einen Netzanschlusspunkt elektrisch verbunden ist; Schalten von elektrischen Schaltern der Windenergieanlage oder des Windparks durch eine Steuereinheit der Windenergieanlage oder des Windparks, die durch eine Niederspannungsversorgung betrieben wird, so dass die Windenergieanlage oder der Windpark spannungsfrei ist; Prüfen eines elektrischen Speichers zur Sicherstellung der Niederspannungsversorgung nachdem der Netzfehler innerhalb des elektrischen Versorgungsnetzes festgestellt worden ist; Schalten von weiteren elektrischen Schaltern der Windenergieanlage oder des Windparks in einen vordefinierten Schaltzustand, in dem ein Anfahren der Windenergieanlage oder des Windparks möglich ist.

Es wird also insbesondere ein Verfahren vorgeschlagen, mit dem ein Windpark in eine gesicherte Schalterstellung gebracht wird, die ein Anfahren des Windparks nach einem Netzausfall ermöglicht.

Das Verfahren wird dabei bevorzugt von einer nachstehend beschriebenen Windenergieanlagensteuereinheit oder einer nachstehend beschriebenen Windparksteuereinheit ausgeführt.

In einem ersten Schritt des Verfahrens wird festgestellt, ob das elektrische Versorgungsnetz einen Netzfehler aufweist., bspw. mittels einer Messeinheit der Windenergieanlage oder einer Messeinheit des Windparks, die insbesondere dazu eingerichtet ist, eine Spannung eines elektrischen Windparknetzes und/oder eines elektrischen Versorgungsnetzes zu erfassen.

Bevorzugt wird der Netzfehler innerhalb des elektrischen Versorgungsnetzes mittels eines Erfassens der Netzspannung des elektrischen Versorgungsnetzes ermittelt.

Unter einem Netzfehler sind hierin insbesondere all jene Fehler innerhalb eines elektrischen Versorgungsnetzes zu verstehen, die, insbesondere kurzfristig, zu einer wesentlichen und/oder anhaltenden Abweichung der Netzspannung von der Netz-Nenn-Spannung führen. Demnach liegt beispielsweise ein Netzfehler vor, wenn die Netzspannung innerhalb von einer Sekunde von 100 Prozent der Netz-Nenn-Spannung auf 90 Prozent der Netz-Nenn-Spannung abfällt.

In einer weiteren Ausführungsform wird unter einem Netzfehler insbesondere ein Fehler innerhalb des elektrischen Versorgungsnetzes verstanden, bei dem die Netzspannung unterhalb von 10 Prozent der Netz-Nenn-Spannung liegt und der Fehler insbesondere über eine längere Zeit ansteht, bspw. für mehr als eine Minute. Solche Fehler werden auch als schwere Netzfehler bezeichnet und führen im Allgemeinen zum Netzausfall.

In einer besonders bevorzugten Ausführungsform ist unter einem Netzfehler insbesondere ein Netzausfall zu verstehen, in dem das elektrische Versorgungsnetz im Wesentlichen keine Spannung mehr aufweist, bevorzugt für wenigstens 30 Minuten.

In einem nächsten Schritt wird wenigstens ein elektrischer Schalter der Windenergieanlage oder des Windparks, bevorzugt durch eine Steuereinheit der Windenergieanlage oder des Windparks, so geschaltet, dass die Windenergieanlage oder der Windpark spannungsfrei ist. Dies bedeutet insbesondere, dass die Windenergieanlage mittels eines Leistungsschalters von dem elektrischen Windparknetz getrennt wird oder dass der Windpark mittels eines Leistungsschalter von dem elektrischen Versorgungsnetz getrennt wird. Das Schalten erfolgt dabei insbesondere so, dass ein Leistungsstrang der Windenergieanlage oder des Windparks spannungsfrei geschaltet ist.

Unter spannungsfrei bzw. spannungslos ist hierin insbesondere zu verstehen, dass der Leistungsstrang der Windenergieanlage bzw. des Windparks im Wesentlichen keine Spannung mehr aufweist. Gleichwohl kann der Steuer- und Leittechnikstrang, der bspw. die Kommunikations-, Steuer- und Schutzgeräte umfasst, noch eine Betriebsspannung aufweisen, insbesondere um die Betriebssicherheit der Windenergieanlage oder des Windparks zu gewährleisten. Ein Leistungsstrang weist üblicherweise mehrere hundert Volt, bevorzugt mehr als 1kV, auf, und dient insbesondere dem Leistungstransport. Ein Steuer- und Leittechnikstrang weist üblicherweise 12V oder 24V oder einige hundert Volt auf, je nach Betriebsmittel, und dient insbesondere dem Informations- und Datenaustausch.

In einem weiteren Schritt wird geprüft, ob der elektrische Speicher der Windenergieanlage oder des Windparks, der zur Sicherstellung der Niederspannungsversorgung, also des Steuer- und Leittechnikstranges, dient, noch genügend elektrische Energie aufweist, insbesondere um bspw. eine Störfallregelung zu aktivieren und auszuführen und/oder um die Windenergieanlage oder den Windpark zu einem späteren Zeitpunkt wieder anzufahren.

Es wird also insbesondere der Ladezustand des elektrischen Speichers des Steuer- und Leittechnikstranges geprüft, bspw. durch die Windenergieanlagensteuereinheit oder die Windparksteuereinheit.

Hierdurch soll insbesondere verhindert werden, dass es zu einer Tiefentladung des elektrischen Speichers kommt, während die Windenergieanlage oder der Windpark vom elektrischen Versorgungsnetz getrennt ist und insbesondere keine elektrische Leistung erzeugt. Im Falle einer solchen Tiefentladung des elektrischen Speichers kann es nämlich dazu kommen, dass die Windenergieanlage oder der Windpark nicht mehr von außen, bspw. durch einen Netzbetreiber, angesteuert werden kann. Es wäre dann also insbesondere keine Fernsteuerung der Windenergieanlage oder des Windparks mehr möglich.

In einem weiteren Schritt werden anschließend weitere elektrische Schalter der Windenergieanlage oder des Windparks geschaltet.

Es wird also insbesondere vorgeschlagen, die weiteren Schalter zu schalten, bevor der Windpark, insbesondere der elektrische Speicher, keine Energie mehr aufweist.

Insbesondere werden die weiteren Schalter dabei in einen vordefinierten Schaltzustand geschaltet, bevorzugt so, dass die Windenergieanlage oder der Windpark zu einem späteren Zeitpunkt wieder angefahren werden kann
In einer weiter bevorzugten Ausführungsform sind die vordefinierten Schaltzustände in der Windenergieanlagensteuereinheit oder der Windparksteuereinheit hinterlegt, bevorzugt also Funktion eines Ladezustandes des elektrischen Speichers.

Es wird also insbesondere vorgeschlagen, die Windenergieanlage oder den Windpark nach einem Netzausfall in einen Zustand zu versetzen, der es ermöglicht, die Windenergieanlage oder den Windpark zu einem späteren Zeitpunkt wieder anzufahren.

Es wird also bevorzugt ein Standby-Modus für Windenergieanlagen oder Windparks vorgeschlagen, der durch vordefinierte Schalterstellungen, insbesondere von Leistungsschaltern, eingenommen wird. Ein Beispiel hierfür ist: ein Windpark mit zehn Windenergieanlagen, der nach einem Netzausfall vom elektrischen Versorgungsnetz getrennt wird, wobei acht der zehn Windenergieanlagen zudem vom elektrischen Windparknetz getrennt werden, sodass nur noch zwei der zehn Windenergieanlagen des Windparks über das elektrische Windparknetz miteinander verbunden sind. Diese beiden Windenergieanlagen werden dann dazu verwendet, den Windpark zu einem späteren Zeitpunkt wieder anzufahren.

Durch ein solches Vorgehen ist es insbesondere möglich, einen Windpark ferngesteuert anzufahren, auch wenn dieser kaum noch Energie zum Anfahren zur Verfügung hat. Ein solcher Windpark kann dann insbesondere an einem Netzwiederaufbau teilnehmen.

Vorzugsweise ist der Netzfehler ein, insbesondere andauernder, Ausfall des elektrischen Versorgungsnetzes.

Der Netzfehler ist also insbesondere ein Netzausfall oder ein sogenannter black out und das vorstehend oder nachstehend beschriebene Verfahren wird insbesondere dazu verwendet, mit einer Windenergieanlage oder einem Windpark ein elektrisches Versorgungsnetz wiederaufzubauen.

Das vorstehend oder nachstehend beschriebene Verfahren ist also insbesondere kein sogenanntes "low voltage ride through"-Verfahren (LVRT), bei dem versucht wird, ein Spannungseinbruch im elektrischen Versorgungsnetz zu durchfahren, insbesondere ohne die Windenergieanlage oder den Windpark vom elektrischen Versorgungsnetz zu trennen.

Vorzugsweise wird der vordefinierte Schaltzustand durch einen Netzbetreiber des elektrischen Versorgungsnetzes vorgegeben.

Der Schaltzustand wird also insbesondere so vordefiniert bzw. gewählt, dass damit Anforderungen eines bzw. des Netzbetreibers Genüge getan wird. Beispielsweise schreibt der Netzbetreiber bestimmte Anforderungen für den Netzanschlusspunkt für den Fall des Netzausfalls oder des Netzwiederaufbaus vor, die mittels dem vordefinierten Schaltzustand erfüllt werden müssen. Derartige Anforderungen können bspw. seitens des Netzbetreibers durch ein Netzschutzkonzept vorgegeben werden.

Vorzugsweise weist die Windenergieanlage oder der Windpark nach dem Schalten der weiteren elektrischen Schalter einen, insbesondere sicheren, Betriebszustand auf, in dem wenigstens eine Funktion der nachfolgenden Liste ausgeführt werden kann, bestehend aus:
- Anfahren der Windenergieanlage oder des Windparks in einem Eigenbedarf;
- Betreiben der Windenergieanlage oder des Windparks in einem Eigenbedarf;
- Schalten von Entkupplungsvorrichtungen der Windenergieanlage oder des Windparks;
- Synchronisieren der Windenergieanlage oder des Windparks mit dem elektrischen Versorgungsnetz.

Im Eigenbedarf wird insbesondere die Niederspannung mit elektrischer Energie versorgt, insbesondere so, dass etwaige Kommunikations-, Steuer- und Schutzgeräte der Windenergieanlage oder des Windparks mit Strom versorgt bzw. betriebsbereit gehalten werden.

Ferner ist die Entkupplungsvorrichtung dabei insbesondere als Leistungsschalter ausgeführt und dazu eingerichtet, die Windenergieanlage oder den Windpark von einem elektrischen Windparknetz oder einem elektrischen Versorgungsnetz zu trennen.

Vorzugsweise erfolgt das Schalten der weiteren elektrischen Schalter der Windenergieanlage oder des Windparks in einen vordefinierten Schaltzustand erst, nachdem ein Netzbetreiber darüber informiert worden ist, dass die weiteren elektrischen Schalter geschaltet werden sollen.

Es wird also insbesondere auch vorgeschlagen, dass die Windenergieanlage oder Windpark nur in Abstimmung mit dem Netzbetreiber den vordefinierten Schaltzustand einnimmt.

Die Windenergieanlage oder der Windpark meldet also bevorzugt an einen Netzbetreiber, dass der vordefinierte Schaltzustand eingenommen werden soll und der Netzbetreiber bestätigt dies.

Durch ein solches Vorgehen wird der Netzbetreiber in die Lage versetzt, einen besseren Überblick über die Erzeuger in seinem elektrischen Versorgungsnetz während eines Netzfehlers zu haben.

Alternativ oder zusätzlich wird vorgeschlagen, dass der erfasste bzw. festgestellte Netzfehler bei dem Netzbetreiber des elektrischen Versorgungsnetzes verifiziert wird.

Sofern also die Windenergieanlage oder der Windpark einen Netzfehler, insbesondere einen Netzausfall, feststellt, wird dieser bei dem Netzbetreiber verifiziert, bspw. mittels einer Signalleitung zwischen der Windenergieanlagensteuereinheit oder der Windparksteuereinheit und dem Netzbetreiber.

Der Netzbetreiber verifiziert dann der Windenergieanlage oder dem Windpark, dass es sich bei dem festgestellten Netzfehler um einen Fehler handelt oder aber bspw. um eine bewusste Netzabschaltung, die insbesondere kein Netzfehler ist.

Vorzugsweise umfasst das Verfahren ferner den Schritt: Übersenden einer Statusinformation an einen Netzbetreiber des elektrischen Versorgungsnetzes, dass die weiteren Schalter der Windenergieanlage oder des Windparks geschaltet worden sind.

Es wird also insbesondere vorgeschlagen, den Netzbetreiber darüber zu informieren, dass die weiteren Schalter geschaltet worden sind bzw., dass die Windenergieanlage oder der Windpark den vordefinierten Schaltzustand eingenommen hat.

Dies kann auch innerhalb des Signals der Störfallregelung erfolgen. Sendet der Netzbetreiber bspw. das Signal "Störfallregelung", so kann der Windpark davon ausgehen, dass der Netzfehler verifiziert ist. Umgekehrt kann die, an den Netzbetreiber zurückgemeldete Störfallregelung signalisieren, dass auch die definierte Schalterstellung eingeschaltet wurde.

Vorzugsweise umfasst das Verfahren ferner den Schritt: Aktivieren einer Störfallregelung der Windenergieanlage oder des Windparks, in dem ein sicherer Betrieb der Windenergieanlage oder Windparks trotz des Netzfehlers ermöglicht wird.

Bevorzugt umfasst die Störfallregelung wenigstens eine der nachfolgenden Funktionen:
- eine Funktion, die ein Einschalten eines Kuppelschalters an einem Anschlusspunkt der Windenergieanlage oder des Windparks ermöglicht;
- eine Funktion, die ein Übersenden einer Statusinformation an einen Netzbetreiber ermöglicht, insbesondere bevor der elektrische Speicher entladen ist;
- eine Funktion, die ein Übersenden einer Statusinformation an einen Netzbetreiber ermöglicht, insbesondere nachdem der vordefinierte Schaltzustand eingenommen bzw. hergestellt worden ist;
- eine Funktion, die ein Überprüfen eines Netzzustandes ermöglicht, insbesondere um zwischen einem Netzfehler und einer Netzabschaltung differenzieren zu können;
- eine Funktion, die ein Anfahren einer oder aller Windenergieanlagen oder des Windparks verhindert bzw. unterdrückt;
- eine Funktion, die ein Schalten eines Stufenschalters eines Transformators ermöglicht, insbesondere des Transformators am Anschlusspunkt;
- eine Funktion, die einen Parametersatz für die Steuereinheit aktiviert, der einen Betrieb der Windenergieanlage oder des Windparks während eines Netzausfalles ermöglicht.

Vorzugsweise umfasst das Verfahren ferner den Schritt: galvanisches Trennen der Windenergieanlage oder des Windparks vom elektrischen Versorgungsnetz mittels einer Entkupplungsvorrichtung, insbesondere um die Windenergieanlage oder den Windpark spannungslos zu schalten.

Das galvanische Trennen kann bspw. mittels einer Entkupplungsvorrichtung in Form eines Leistungsschalters in Form eines Kuppelschalters erfolgen, der bevorzugt in der, insbesondere elektrischen, Nähe eines Transformators, bspw. eines Windparktransformators, angeordnet ist.

Erfindungsgemäß wird ferner eine Windenergieanlage mit einer Niederspannungsversorgung vorgeschlagen, die einen elektrischen Speicher und eine Windenergieanlagensteuereinheit aufweist, die dazu eingerichtet ist, ein vorstehend oder nachstehend beschriebenes Verfahren auszuführen.

Bevorzugt ist die Windenergieanlage wie vorstehend oder nachstehend beschrieben ausgeführt.

Die Windenergieanlage umfasst dabei wenigstens eine vorstehend oder nachstehend beschriebene Windenergieanlagesteuereinheit, die über eine Niederspannungsversorgung betrieben wird.

Die Windenergieanlageanlage weist also wenigstens eine Niederspannung von bspw. kleiner 1kV auf, mittels derer etwaige Kommunikations-, Steuer- und Schutzgeräte der Windenergieanlage versorgt werden.

Insbesondere ist die Windenergieanlage eine Windenergieanlage eines vorstehend oder nachstehend beschriebenen Windparks und die Windenergieanlagensteuereinheit ist bevorzugt dazu eingerichtet mit, mit einer vorstehend oder nachstehend beschriebenen Windparksteuereinheit, zu kommunizieren, bspw. über eine Signalleitung.

In einer bevorzugten Ausführungsform weist die Windenergieanlagensteuereinheit eine vorstehend oder nachstehend beschriebene Messeinheit auf, die dazu eingerichtet ist, eine Spannung eines elektrischen Windparknetzes und/oder eines elektrischen Versorgungsnetzes zu erfassen.

Erfindungsgemäß wird ferner ein Windpark mit einer Niederspannungsversorgung vorgeschlagen, der einen elektrischen Speicher und eine Windparksteuereinheit aufweist, die dazu eingerichtet ist, ein vorstehend oder nachstehend beschriebenes Verfahren auszuführen.

Der Windpark ist bevorzugt über einen Netzanschlusspunkt mit einem elektrischen Versorgungsnetz verbunden und weist eine Vielzahl von Windenergieanlagen auf, die über ein gemeinsames elektrisches Windparknetz miteinander verbunden sind.

Bevorzugt umfasst der Windpark eine Vielzahl von Windenergieanlagen, wie vorstehend oder nachstehend beschrieben.

Besonders bevorzugt wird der Windpark mittels einer vorstehend oder nachstehend beschriebenen Windparksteuereinheit gesteuert.

Zudem umfasst der Windpark wenigstens eine vorstehend oder nachstehend beschriebene Windenergieanlagesteuereinheit, die über eine Niederspannungsversorgung betrieben wird.

Der Windpark weist also wenigstens eine Niederspannung von bspw. kleiner 1 kV auf, mittels derer etwaige Kommunikations-, Steuer- und Schutzgeräte des Windparks versorgt werden.

An dieser Niederspannung sind bevorzugt auch die Niederspannungen der einzelnen Windenergieanlagen des Windparks angeschlossen.

In einer bevorzugten Ausführungsform weist die Windparksteuereinheit eine vorstehend oder nachstehend beschriebene Messeinheit auf, die dazu eingerichtet ist, eine Spannung eines elektrischen Windparknetzes und/oder eines elektrischen Versorgungsnetzes zu erfassen.

In einer weiter bevorzugten Ausführungsform weist die Windparksteuereinheit oder die Windenergieanlagensteuereinheit wenigstens eine Funktion der nachfolgenden Liste auf:
- eine Funktion, die ein Einschalten eines Kuppelschalters an einem Anschlusspunkt der Windenergieanlage oder des Windparks ermöglicht;
- eine Funktion, die ein Übersenden einer Statusinformation an einen Netzbetreiber ermöglicht, insbesondere bevor der elektrische Speicher entladen ist;
- eine Funktion, die ein Übersenden einer Statusinformation an einen Netzbetreiber ermöglicht, insbesondere nachdem der vordefinierte Schaltzustand eingenommen bzw. hergestellt worden ist;
- eine Funktion, die ein Überprüfen eines Netzzustandes ermöglicht, insbesondere um zwischen einem Netzfehler und einer Netzabschaltung differenzieren zu können;
- eine Funktion, die ein Anfahren einer oder aller Windenergieanlagen oder des Windparks verhindert bzw. unterdrückt;
- eine Funktion, die einen Betriebsmodus: Störfallregelung auslöst, in dem die Windenergieanlage oder der Windpark in einem gesicherten Modus betrieben werden kann, auch wenn ein Netzfehler, insbesondere Netzausfall, ansteht oder in dem die Windenergieanlage oder der Windpark einen Schwarzstart ausführen oder an einem Netzwiederaufbau teilnehmen kann;
- eine Funktion, die ein Schalten eines Stufenschalters eines Transformators ermöglicht, insbesondere des Transformators am Anschlusspunkt;
- eine Funktion, die einen Parametersatz für die Steuereinheit aktiviert, der einen Betrieb der Windenergieanlage oder des Windparks während eines Netzausfalles ermöglicht.

Auch sind weitere Funktionen denkbar, die die Betriebssicherheit der Windenergieanlage oder des Windparks während eines Ausfalles des elektrischen Versorgungsnetzes erhöhen.

Der hierin beschriebene elektrische Speicher hat dabei insbesondere die Aufgabe, als Unterbrechungsfreie Stromversorgung (kurz: USV) zu fungieren, die etwaige Kommunikations-, Steuer- und Schutzgeräte der Windenergieanlage oder Windparks auch dann mit Strom versorgt, wenn die Windenergieanlage oder der Windpark keine elektrische Leistung erzeugt, weil bspw. das elektrische Versorgungsnetz ausgefallen ist.

Die vorliegende Erfindung wird nun nachfolgend exemplarisch anhand von Ausführungsbeispielen unter Bezugnahme auf die begleitenden Figuren näher erläutert, wobei für gleiche oder ähnlich Baugruppen dieselben Bezugszeichen verwendet werden.
- Fig. 1: zeigt eine schematische Ansicht einer Windenergieanlage gemäß einer Ausführungsform.
- Fig. 2: zeigt eine schematische Ansicht eines Windparks gemäß einer Ausführungsform.
- Fig. 3: zeigt einen schematischen Ablauf eines Verfahrens zum Steuern eines Windparks gemäß einer Ausführungsform.

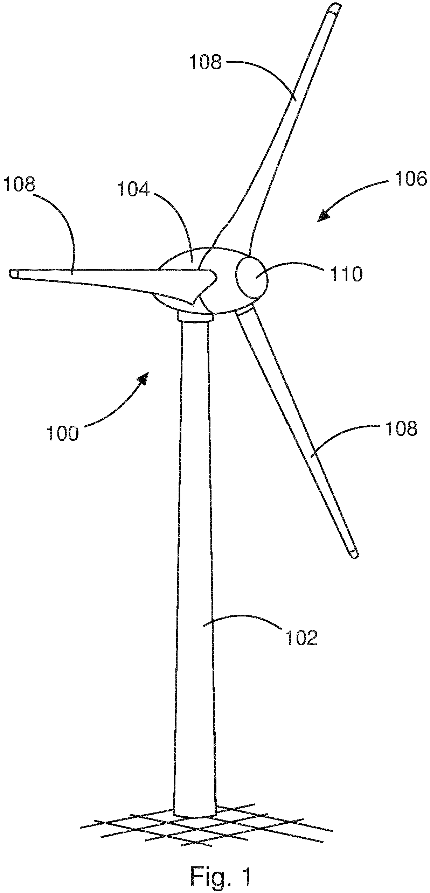

Fig. 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Ferner weist die Windenergieanlage 100 eine vorstehend oder nachstehend beschriebene Windenergieanlagensteuereinheit auf, die mit einer, insbesondere vorstehend oder nachstehend beschriebenen, Windparksteuereinheit und/oder einem Netzbetreiber verbunden ist.

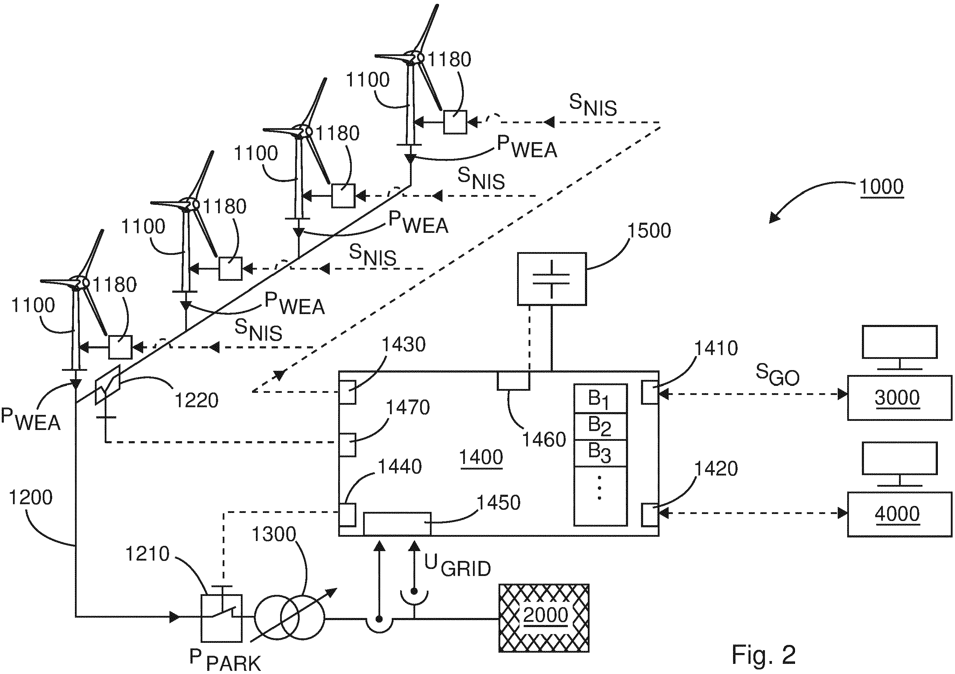

Fig. 2 zeigt einen schematischen Aufbau eines Windparks 1000 gemäß einer Ausführungsform.

Der Windpark 1000 umfasst eine Vielzahl von Windenergieanlagen 1100, wie bspw. in Fig. 1 gezeigt, die über ein gemeinsames Windparknetz 1200 miteinander verbunden sind.

Das Windparknetz 1200 weist Schalter 1210, insbesondere einen Kuppelschalter für den Windpark, und weitere Schalter 1220 auf und ist mittels eines Windparktransformators 1300 an ein elektrisches Versorgungsnetz 2000 angeschlossen, um bspw. eine elektrische Windparkleistung Pₚₐᵣₖ einzuspeisen, welche sich aus einer Summe der einzelnen elektrischen Windenergieanlagenleistungen P_{wea} zusammensetzt.

Die Windenergieanlage 1100 und das Windparknetz 1200 bilden zusammen mit dem Windparktransformator den Leistungsstrang (durchgezogene Linien) aus, also insbesondere jene Baugruppe, die für den Energietransport in das elektrische Versorgungsnetz verantwortlich sind.

Ferner weist der Windpark 1000 eine Windparksteuereinheit 1400 auf, die dazu eingerichtet ist, den Windpark 1000 zu steuern. Hierfür ist die Windparksteuereinheit 1400 insbesondere mit den Windenergieanlagensteuereinheiten 1180 der Windenergieanlagen 1100 verbunden.

Der Windpark 1000 weist also neben dem Leistungsstrang (durchgezogene Linien) auch einen Steuer- und Leittechnikstrang (gestrichelte Linien) auf, der nachfolgend beschrieben wird.

Die Windparksteuereinheit 1400 weist eine Vielzahl von Schnittstellen 1410, 1420, 1430, 1440, 1450, 1460 sowie eine Vielzahl von Betriebsmodi B1, B2, B3, wie bspw. einer Störfallregelung, auf und wird mittels eines elektrischen Speichers mit Energie versorgt, insbesondere auch dann, wenn der Windpark keine elektrische Leistung erzeugt und/oder das elektrische Versorgungsnetz einen Netzfehler aufweist oder ausgefallen ist.

Die Schnittstelle 1410 ist dazu eingerichtet, Signale an einen Netzbetreiber 3000 zu senden oder von diesem zu empfangen. Diese Schnittstelle 1410 kann auch als Netzbetreiberschnittstelle bezeichnet werden.

Die Schnittstelle 1420 ist bspw. eine Schnittstelle für den Anlagenbetreiber 4000, der über diese Schnittstelle 1420 ebenfalls auf den Windpark zugreifen kann. Diese Schnittstelle 1420 kann auch als Windparkbetreiberschnittstelle 1420 bezeichnet werden.

Die Ansteuerung der einzelnen Windenergieanlagen 1100 des Windparks 1000 erfolgt über eine Steuerschnittstelle 1430, die mit den einzelnen Windenergieanlagensteuereinheiten 1180 verbunden ist, bspw. mittels verschiedener Steuersignale S_{NIS}.

Mittels der Schnittstelle 1440 kann die Windparksteuereinheit den Windpark mittels des Schalters 1210 vom elektrischen Versorgungsnetz trennen. Diese Schnittstelle 1440 kann auch als Trennschnittstelle bezeichnet werden.

Mittels der Schnittstelle 1450 kann die Windparksteuereinheit die Einspeisung des Windparks und/oder eine Spannung U_{grid} im elektrischen Versorgungsnetz 2000 erfassen. Diese Schnittstelle 1450 kann auch als Messschnittstelle bezeichnet werden.

Mittels der Schnittstelle 1460 kann die Windparksteuereinheit den Zustand des elektrischen Speichers 1500 überwachen. Diese Schnittstelle 1460 kann auch als Überwachungsschnittstelle bezeichnet werden.

Mittels der Schnittstelle 1470 kann die Windparksteuereinheit einen weiteren Schalter 1220 schalten, insbesondere so, dass der Windpark einen vordefinierten Schaltzustand aufweist. Diese Schnittstelle kann auch als Schaltschnittstelle bezeichnet werden.

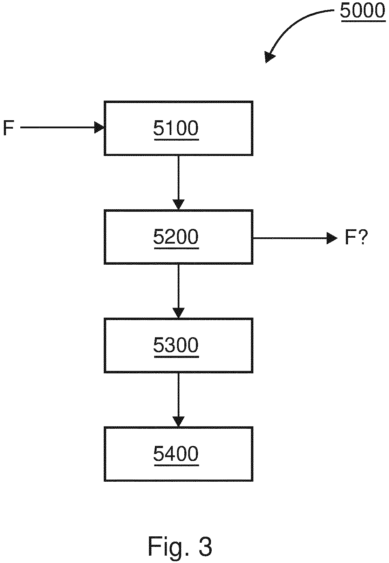

Fig. 3 zeigt einen schematischen Ablauf 5000 eines Verfahrens zum Steuern eines Windparks gemäß einer Ausführungsform.

In einem ersten Schritt 5100 wird ein Netzfehler festgestellt, bspw. über eine Messschnittstelle einer Windparksteuereinheit, wie in Fig. 2 gezeigt.

In einem nächsten Schritt 5200 wird der Netzfehler bei einem Netzbetreiber verifiziert, bspw. über eine Netzbetreiberschnittstelle, wie in Fig. 2 gezeigt.

Je nach Netzbetreiber kann aber auch von einem Netzfehler nach Ablauf einer gewissen Zeit ausgegangen werden.

In einem nächsten Schritt 5300 wird der Windpark vom elektrischen Versorgungsnetz getrennt, bspw. über eine Trennschnittstelle mittels eines Schalters, wie in Fig. 2 gezeigt.

In einem nächsten Schritt 5400 wird der elektrische Speicher geprüft, bspw. über eine Überwachungsschnittstelle, wie in Fig. 2 gezeigt, und ein weiterer Schalter geschaltet, sodass der Windpark einen vordefinierten Schaltzustand aufweist, insbesondere so, dass ein Netzschutzplan eines Netzbetreibers erfüllt ist.

### Bezuqszeichenliste

- 100: Windenergieanlage
- 102: Turm, insbesondere der Windenergieanlage
- 104: Gondel, insbesondere der Windenergieanlage
- 106: aerodynamischer Roter, insbesondere der Windenergieanlage
- 108: Rotorblatt, insbesondere der Windenergieanlage
- 110: Spinner, insbesondere der Windenergieanlage

- 1000: Windpark
- 1100: Windenergieanlage, insbesondere des Windparks
- 1200: Windparknetz, insbesondere des Windparks
- 1210: Schalter, insbesondere Kuppelschalter, insbesondere des Windparknetzes
- 1220: weitere Schalter, insbesondere des Windparknetzes
- 1300: Windparktransformator, insbesondere des Windparks
- 1400: Windparksteuereinheit. Insbesondere eines Windparks
- 1410: Netzbetreiberschnittstelle, insbesondere der Windparksteuereinheit
- 1420: Windparkbetreiberschnittstelle, insbesondere der Windparksteuereinheit
- 1430: Steuerschnittstelle, insbesondere der Windparksteuereinheit
- 1440: Trennschnittstelle, insbesondere der Windparksteuereinheit
- 1450: Messschnittstelle, insbesondere der Windparksteuereinheit
- 1460: Überwachungsschnittstelle, insbesondere der Windparksteuereinheit
- 1470: Schaltschnittstelle, insbesondere der Windparksteuereinheit

- 1500: elektrischer Speicher, insbesondere des Windparks
- Pₚₐᵣₖ: Windparkleistung
- P_{wea}: Windenergieanlagenleistungen
- S_{NIS}: Steuersignale, insbesondere der Windparksteuereinheit
- U_{grid}: Spannung des elektrischen Versorgungsnetzes

## Patentansprüche

1. Verfahren zum Steuern einer Windenergieanlage oder eines Windparks, umfassend die Schritte:
- Feststellen eines Netzfehlers innerhalb eines, von einem Netzbetreiber betriebenen elektrischen Versorgungsnetzes mit dem die Windenergieanlage oder der Windpark über einen Netzanschlusspunkt elektrisch verbunden ist;
- Schalten von elektrischen Schaltern der Windenergieanlage oder des Windparks durch eine Steuereinheit der Windenergieanlage oder des Windparks, die durch eine Niederspannungsversorgung betrieben wird, so dass die Windenergieanlage oder der Windpark spannungsfrei ist;
- Prüfen eines elektrischen Speichers zur Sicherstellung der Niederspannungsversorgung, nachdem der Netzfehler innerhalb des elektrischen Versorgungsnetzes festgestellt worden ist;
- Schalten von weiteren elektrischen Schaltern der Windenergieanlage oder des Windparks in einen vordefinierten Schaltzustand, in dem ein Anfahren der Windenergieanlage oder des Windparks möglich ist.

2. Verfahren zum Steuern einer Windenergieanlage oder eines Windparks nach Anspruch 1, wobei
- der Netzfehler ein, insbesondere andauernder, Ausfall des elektrischen Versorgungsnetzes ist.

3. Verfahren zum Steuern einer Windenergieanlage oder eines Windparks nach Anspruch 1 oder 2, wobei
- der vordefinierte Schaltzustand durch einen Netzbetreiber des elektrischen Versorgungsnetzes vorgegeben wird.

4. Verfahren zum Steuern einer Windenergieanlage oder eines Windparks nach wenigstens einem der vorstehenden Ansprüche, wobei
- die Windenergieanlage oder der Windpark nach dem Schalten der weiteren elektrischen Schalter einen Betriebszustand aufweist, in dem wenigstens eine Funktion der nachfolgenden Liste ausgeführt werden kann, bestehend aus:
- Anfahren der Windenergieanlage oder des Windparks in einem Eigenbedarf;
- Betreiben der Windenergieanlage oder des Windparks in einem Eigenbedarf;
- Schalten von Entkupplungsvorrichtungen der Windenergieanlage oder des Windparks;
- Synchronisieren der Windenergieanlage oder des Windparks mit dem elektrischen Versorgungsnetz.

5. Verfahren zum Steuern einer Windenergieanlage oder eines Windparks nach wenigstens einem der vorstehenden Ansprüche, wobei
- das Schalten der weiteren elektrischen Schalter der Windenergieanlage oder des Windparks in einen vordefinierten Schaltzustand erst erfolgt, nachdem ein Netzbetreiber darüber informiert worden ist, dass die weiteren elektrischen Schalter geschaltet werden sollen.

6. Verfahren zum Steuern einer Windenergieanlage oder eines Windparks nach wenigstens einem der vorstehenden Ansprüche, ferner umfassend den Schritt:
- Verifizieren des Netzfehlers bei dem Netzbetreiber des elektrischen Versorgungsnetzes.

7. Verfahren zum Steuern einer Windenergieanlage oder eines Windparks nach wenigstens einem der vorstehenden Ansprüche, ferner umfassend den Schritt:
- Übersenden einer Statusinformation an einen Netzbetreiber des elektrischen Versorgungsnetzes, dass die weiteren Schalter der Windenergieanlage oder des Windparks geschaltet worden sind.

8. Verfahren zum Steuern eines Windparks nach wenigstens einem der Ansprüche 1 bis 7, ferner umfassend den Schritt:
- Aktivieren einer Störfallregelung der Windenergieanlage oder des Windparks, in dem ein sicherer Betrieb der Windenergieanlage oder des Windparks trotz des Netzfehlers ermöglicht wird.

9. Verfahren zum Steuern eines Windparks nach wenigstens einem der Ansprüche 1 bis 8, ferner umfassend den Schritt:
- galvanisches Trennen der Windenergieanlage oder des Windparks vom elektrischen Versorgungsnetz mittels einer Entkupplungsvorrichtung, insbesondere um die Windenergieanlage oder den Windpark spannungslos zu schalten.

10. Windenergieanlage oder Windpark mit:
- einer Niederspannungsversorgung, die
- einen elektrischen Speicher und
- eine Steuereinheit aufweist, die dazu eingerichtet ist, ein Verfahren nach einem der Ansprüche 1 bis 9 auszuführen.

11. Windenergieanlage oder Windpark, nach Anspruch 10, wobei
- die Niederspannungsversorgung eine Gleichspannung aufweist.

12. Windenergieanlage oder Windpark, nach Anspruch 10 oder 11, ferner umfassend
- eine Entkupplungsvorrichtung mittels derer die Windenergieanlage oder der Windpark mit einem elektrischen Versorgungsnetz an einem Netzanschlusspunkt verbunden werden kann.
